# EUROPEAN PATENT APPLICATION

(11) **EP 3 330 854 A1**
(43) Date of publication of application: **06.06.2018**
(21) Application number: 17197390.2
(22) Date of filing: 19.10.2017
(51) Int. Cl.: G06F 9/50, G06Q 30/02

(54) **AUTOMATIC SELECTION OF INFRASTRUCTURE ON A HYBRID CLOUD ENVIRONMENT**

(30) Priority: 02.12.2016 GB 201620465
(71) Applicant: FUJITSU LIMITED, Kanagawa 211-8588 (JP)
(72) Inventor: VALIN, Raul, 28003 Madrid (ES); ENRIGHT, Jim, Slough, Berkshire SL1 2BG (GB); CHOW, Peter, Gillingham, Kent ME7 3AH (GB); GEORGESCU, Serban, London, W5 3JY (GB); KURAISHI, Hideaki, London, W3 9BE (GB)
(74) Representative: Haseltine Lake LLP

(57) **Abstract**

A computational infrastructure provider is selected to provide infrastructure for executing a computer application by predicting respective total execution times of the application on different infrastructure systems and using the predicted times to determine which infrastructure system is most likely to satisfy a predetermined execution time objective for executing the application. Prediction is based on stored performance information associated with the application, such as profiling information obtained from a previous execution of the application on the infrastructure systems. A computational infrastructure provider most likely to meet the cost objective is selected, from amongst a private cloud provider and at least one public cloud provider, using stored infrastructure system information to identify which providers are able to provide the selected infrastructure system and comparing the cost of executing the application on each provider's infrastructure system with a predetermined cost objective for executing the application.

## Description

The present invention relates to automatic selection of infrastructure on a hybrid cloud environment.

Cloud services have quickly evolved in the last decade and many cloud service providers now offer a variety of high performance computing (HPC) resources suitable for highly demanding applications. However, cloud service providers leave the responsibility for defining the infrastructure to be employed with users because they have the best knowledge of the application requirements.

For example, one application which often demands a large amount of computational resources is Computer Aided Engineering, which is used to simulate different designs before a product manufacturing process. Engineers and companies need to minimize the product development time and cost, so manufacturing companies tend to invest large amounts of money on new data centres to perform simulations. However, these computing resources are limited, and with hardware development they can rapidly become obsolete. Upgrading a company data centre is expensive, so as an alternative companies have been looking to a hybrid cloud infrastructure model, which is based on a combination of local (private cloud) resources and third-party (public cloud) resources, since this gives businesses greater flexibility and more data deployment options by allowing applications to be run either on the private cloud or on a public cloud as computing needs and costs change. The drawback of this approach is the need to find the optimal cloud provider, i.e. the cloud provider which can provide the desired application performance whilst minimizing the cost.

Cloud providers based on the Infrastructure as a Service business model (laaS) (a form of cloud computing that provides virtualized computing resources over the Internet) update their hardware periodically and provide a wide variety of products that may suit company simulation requirements better than the local data centre.

Cloud providers such as Amazon™, Azure™ and Fujitsu S5 cloud™, offer a large variety of resources for users to define their own infrastructure as a service. This provides a large number of possible configurations, but designing the most suitable infrastructure can be a challenge for users with performance and cost constraints.

More particularly, there is a lack of a method in the prior art to approach the Software as a Service model (SaaS) (i.e. a software licensing and delivery model in which software is licensed on a subscription basis and is centrally hosted. It is sometimes referred to as "on-demand software"), where application performance and cost are the main parameters to provide an optimal service on a hybrid cloud environment in a transparent way.

Accordingly, it is desirable to provide a method and apparatus which can assist in selecting the best cloud providers and minimizing the cost whilst taking into account the application performance and the available resources.

In accordance with an embodiment of the present invention, a computational infrastructure provider is selected to provide an infrastructure system for executing a computer application by predicting respective total execution times of the application on different infrastructure systems and using the predicted times to determine which infrastructure system is most likely to satisfy a predetermined execution time objective for executing the application. Prediction is based on stored performance information associated with the application, such as profiling information obtained from a previous execution of the application on the infrastructure systems. A computational infrastructure provider most likely to meet the cost objective is selected, from amongst a private cloud provider and at least one public cloud provider, using stored infrastructure system information to identify which providers are able to provide the selected infrastructure system and comparing the cost of executing the application on each provider's infrastructure system with a predetermined cost objective for executing the application.

According to an embodiment of a first aspect of the present invention there is provided a computer-implemented method of automatically selecting a computational infrastructure provider to provide an infrastructure system for executing a specified computer application, wherein the method comprises:
predicting respective total execution times of the specified application on a plurality of infrastructure systems as a function of a defined input file, the predicting being carried out on the basis of stored performance information associated with the specified application;
using the predicted total execution times to determine which of the infrastructure systems is most likely to satisfy a predetermined execution time objective for executing the application;
identifying, from a group of computational infrastructure providers comprising a private cloud provider and at least one public cloud provider, those computational infrastructure providers which are able to provide the selected infrastructure system, and, for each computational infrastructure provider so identified, comparing the cost of executing the application on the computational infrastructure provider's infrastructure system with a predetermined cost objective for executing the application, the identifying and the comparing being carried out on the basis of stored infrastructure system information associated with the computational infrastructure providers; and
using the result of the comparing to select at least one of the identified computational infrastructure providers which is most likely to meet the cost objective.

A method embodying the first aspect of the present invention may further comprise automatically deploying the specified application and the selected infrastructure system using the selected computational infrastructure provider.

In a method embodying the first aspect of the present invention, the stored performance information may comprise profiling information that has been obtained from at least one previous execution of the application on the infrastructure systems.

A method embodying the first aspect of the present invention may further comprise monitoring execution of the deployed application, and storing the actual time and cost to solution of that application on the selected infrastructure system as profiling information for possible use in future selections of computational infrastructure providers.

Additionally or alternatively, in a method embodying the first aspect of the present invention, the stored performance information may comprise theoretical and empirical performance results obtained for each computational infrastructure provider in the group using synthetic benchmarks.

According to an embodiment of a second aspect of the present invention there is provided a computer program which, when run on a computer, causes that computer to carry out a method embodying the first aspect of the present invention.

According to an embodiment of a third aspect of the present invention there is provided computational infrastructure provider selection apparatus for automatically selecting a computational infrastructure provider to provide an infrastructure system for executing a specified computer application, which apparatus comprises: an applications' database to store performance information associated with different computer applications; a providers' database to store infrastructure system information associated with the computational infrastructure providers; an infrastructure selector to select the infrastructure system for executing the specified computer application by: predicting respective total execution times of the specified application on a plurality of infrastructure systems as a function of a defined input file, the predicting being carried out on the basis of performance information associated with the specified application stored in the applications' database; and using the predicted total execution times to determine which of the infrastructure systems is most likely to satisfy a predetermined execution time objective for executing the application; and a provider selector to select a computational infrastructure provider to provide the selected infrastructure system by: identifying, from a group of computational infrastructure providers comprising a private cloud provider and at least one public cloud provider, those computational infrastructure providers which are able to provide the selected infrastructure system, and, for each computational infrastructure provider so identified, comparing the cost of executing the application on the computational infrastructure provider's infrastructure system with a predetermined cost objective for executing the application, the identifying and the comparing being carried out on the basis of infrastructure system information associated with the computational infrastructure providers stored in the providers' database; and using the result of the comparing to select at least one of the identified computational infrastructure providers which is most likely to meet the cost objective.

Apparatus embodying the third aspect of the present invention may further comprise a deployer to automatically deploy the specified application and the selected infrastructure system using the selected computational infrastructure provider.

In apparatus embodying the third aspect of the present invention, the stored performance information may comprise profiling information that has been obtained from at least one previous execution of the computer application on a plurality of different infrastructure systems.

Apparatus embodying the third aspect of the present invention may further comprise a monitor to monitor execution of the deployed application, and store the actual time and cost to solution of that application as profiling information on the selected infrastructure system in the applications' database for possible use in future selections of computational infrastructure providers.

Additionally or alternatively, in apparatus embodying the third aspect of the present invention the stored performance information may comprise theoretical and empirical performance results obtained for each computational infrastructure provider in the group using synthetic benchmarks.

Embodiments of the present invention can provide a method and apparatus which allow the most suitable cloud infrastructure from those available to be chosen based on stored information of applications, for example as collected on at least one of a private cloud and a public cloud, taking into account a hybrid cloud infrastructure, i.e. a cloud infrastructure that combines local resources with public cloud providers. Embodiments of the present invention can provide a method and apparatus for automatically designing the optimal infrastructure and choosing the best provider based on two predefined constraints, execution time and cost, which may be specified by the user or predetermined in some other way. An embodiment of the present invention automatically designs and deploys the best cloud infrastructure that satisfies the predefined execution time and cost constraints. Stored performance information may comprise profiling information from prior execution of real applications and may be combined with a set of synthetic benchmarks that validate the performance of the deployed infrastructure. An embodiment of the invention may also collect the cost information of cloud providers and identify those providers that satisfy the predefined cost constraint.

Embodiments of the invention can make the execution of applications easier for users, because users need only define on the user interface the cost, time constraints and input parameters of the requested application. Embodiments of the invention design the optimal infrastructure with the minimum cost based on the collected information of the user's application and the available services on a hybrid cloud. Embodiments of the invention take into account the user's private cloud infrastructure, which can be considered as an additional cloud service when designing the optimal infrastructure, and also facilitates the collection of information on new applications.

Reference will now be made, by way of example, to the accompanying drawings, in which:
Figure 1 is an overview block diagram of apparatus embodying the present invention;
Figure 2 is an overview flowchart for use in explaining the operation of the apparatus of Figure 1;
Figure 3 is a diagram illustrating an applications' database for use in an embodiment of the present invention;
Figure 4 is a diagram illustrating a providers' database for use in an embodiment of the present invention;
Figure 5 is a diagram illustrating hardware resources for carrying out a method embodying the present invention;
Figure 6 is a diagram illustrating functions performed by software components in an embodiment of the present invention;
Figure 7 is a flowchart for use in explaining operation of a broker for use in an embodiment of the present invention;
Figure 8 is a flowchart for use in explaining an optimization process used in an embodiment of the present invention;
Figure 9 is a sequence diagram for use in explaining the main interactions between components of apparatus embodying the present invention; and
Figure 10 is a block diagram of a computing device embodying the present invention.

Embodiments of the present invention comprise a method and apparatus for automatic deployment and management of an application as a service on a private or public cloud, including the optimal underlying infrastructure. The optimal infrastructure is designed as a combination of the application performance and predetermined constraints in terms of cost and time to solution, i.e. the desired execution time of an application. A method/apparatus embodying the present invention uses the profiling information of the application (if this exists) for a predefined input file. This profiling information is combined with the "infrastructure as a service" information provided by cloud providers to design the optimal infrastructure, with a view to satisfying the time to solution and expected cost that has been already defined. Once the most suitable infrastructure has been defined, the cheapest available provider to deploy the designed infrastructure is found. To guarantee quality of service (QoS), synthetic benchmarking tests may be run to evaluate the memory bandwidth, CPU, I/O, and network performance of the cloud provider. The real time to solution and cost may be monitored, which allows the quality of service to be assessed and future decisions based on previous experiences to be improved. It should be noted that, in the context of the present specification, QoS may be considered as "the acceptable cumulative effect on subscriber satisfaction of all imperfections affecting the service". Other terms with similar meaning to QoS are the quality of experience (QoE) subjective business concept, the required "user perceived performance", the required "degree of satisfaction of the user", and the targeted "number of happy customers".

As explained in more detail below, an embodiment of the present invention comprises apparatus and a method to deploy user applications on a hybrid cloud environment based on performance and cost criteria. The system may be either installed on a user datacentre or configured as a public service.

One embodiment of apparatus according to the present invention comprises:
a. A graphical user interface (GUI) to submit the application or request a predefined service, and the required input parameters (if necessary). In addition, the GUI allows users to define the performance and cost constraints that will be used by the system to design the necessary infrastructure to run the application or service (alternatively, default predefined performance and cost constraints may be used);
b. A broker that implements a method to choose the best cloud provider including the user's private cloud resources. In addition, the broker also interacts with different cloud providers' application programming interfaces (APIs) to deploy and manage the designed computational infrastructure and user applications.
c. An API to allow the broker to communicate with the GUI;
d. Information systems for applications and providers that are used by the broker to design the most suitable and affordable infrastructure according to the performance and cost constraints defined by users. The data structure of the providers' information system contains the available services and cost from different cloud providers and performance information obtained from synthetic benchmarks. The data structure of the applications' information system is based on a combination of the application profiling data and previous executions of the applications or services;
e. An information retrieving system to collect information from cloud providers and applications (including performance, cost and consumed computational resources);
f. A performance prediction system that is used by the broker to design the most suitable infrastructure and provider as a function of the collected data stored in the providers' and applications' information system;
g. A cost prediction system that is used by the broker to choose those providers that satisfy the defined cost constraint once the computational infrastructure has been designed;
h. A deployment system that interacts with the API of the available cloud providers to deploy the designed computational infrastructure, monitor the infrastructure and application performance, execute the user's requested application or services and remove the computational infrastructure once the application or services are no longer necessary;
i. A system to implement the security technologies requested by users such as network or storage encryption; and
j. An agent to collect the performance information of the computational infrastructure and the application.

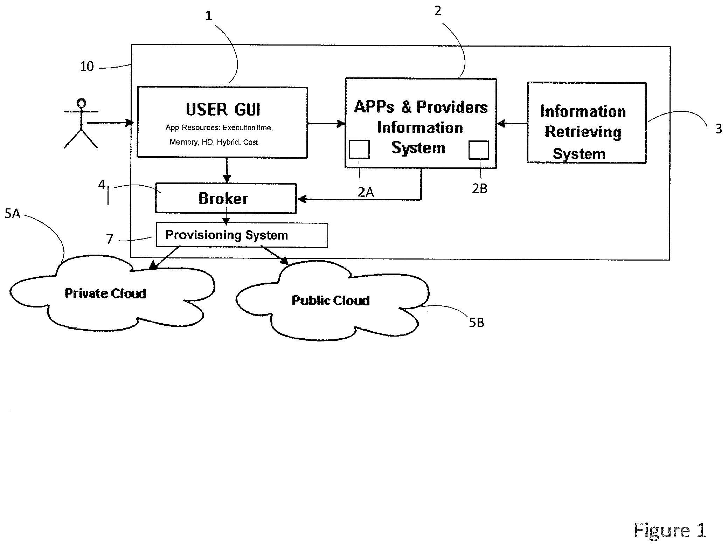

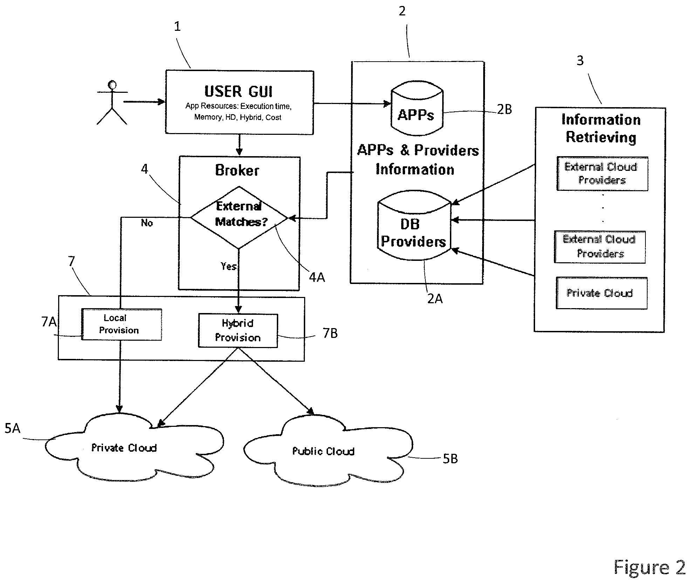

Figure 1 is an overview block diagram of a system 10 embodying the present invention, showing components of the system, and Figure 2 is an overview flow chart for use in explaining how the system 10 of Figure 1 operates.

System 10 comprises a GUI 1 configured to enable a user to choose a stored application or submit a new one. The GUI 1 also allows other parameters of the application to be submitted, such as the necessary time to solution, the maximum cost and the input parameters. The necessary time to solution is defined here as the maximum time to run the application. This includes execution time of the application, data transfer, visualization, etc., before shutting down the application and the infrastructure. The system 10 further comprises an applications' and providers' information system 2, comprising a providers' database 2A and an applications' database 2B, and an information retrieving system 3 configured to collect information from providers and applications for storage in the providers' and applications' databases 2A, 2B. The applications' database 2B is arranged to store key information of the application performance, such as the profiling information of the applications for different input files that has been obtained after running the application (such as the execution time, memory usage and network usage). The providers' database 2A is arranged to store information from public cloud providers 5B and private datacentres (private clouds) 5A to which the user has access. This information may include credentials, description of resources, and theoretical and empirical performance results obtained with a set of synthetic benchmarks to evaluate the real performance of providers.

The system 10 further comprises a broker 4 (embodying an infrastructure selector and a provider selector) and a provisioning system 7 (embodying a deployer and a monitor). The broker 4 is configured use a matching algorithm 4A to design the best infrastructure/system to meet the time to solution, taking into account the profiling information of the application and the available resources on the private and public clouds 5A, 5B. The provisioning system 7 comprises a local provisioning system 7A, configured to connect with the private resources 5A, and a hybrid provisioning system 7B, configured to connect with at least one of the application programming interface (API) of a selected external provider 5B and the private resources 5A via the local provisioning system 7A, to manage the life cycle of the system and submit the application.

At the beginning of the process, in response to the user's selected application, a list of available parameters is retrieved from the applications' database 2B and input files are shown on the GUI 1. The application and all the necessary parameters (time to solution, cost, and input parameters) are then submitted to the broker 4. The broker 4 combines the performance information of providers and the application profiling from the databases 2A, 2B to configure the infrastructure that best matches the time and cost constraints defined by the user. Once the infrastructure is designed, the broker 4 chooses the cheapest provider. The broker 4 will also estimate the average power consumption for cost comparison purposes. Once the cheapest provider is found the broker 4 preferably deploys the resources and the application automatically. In addition, the broker 4 interacts with the provisioning system 7 to submit the application. The above-mentioned selection of the cheapest provider and the most suitable infrastructure may be based on machine learning techniques.

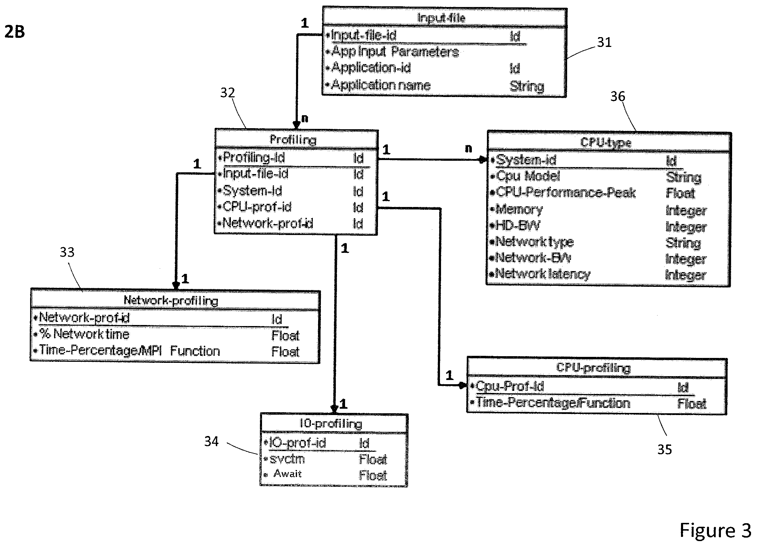

Figure 3 shows an example of the applications' database 2B. The database 2B stores information relating to different applications, each application having a unique identifier ("Application-file-id"). For each input file 31, applications' database 2B also stores profiling tables 32 to 36 containing profiling information of the central processing unit (CPU) and network bottlenecks for each system where the profiling has been executed. The CPU profiling information stored in table 35 provides the percentage of time spent on each function/subroutine of the application. The network profiling information stored in table 33 provides the percentage of the execution time spent on network communications (if the application has any communications) and the percentage of the communication time spent on each communication function. For instance for a message passing interface (MPI) application, the network profiling table 33 could store the percentage of the communication time spent on each MPI function and the message size.

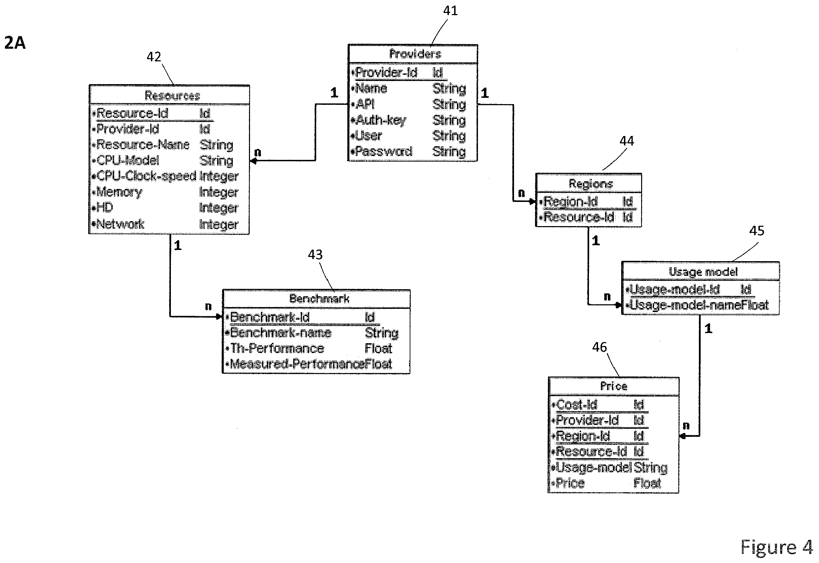

Figure 4 shows an example of the providers' database 2A. It stores a table 41 for each public cloud provider 5B to which the user has access, including information such as how to connect to the providers' API, in association with basic information of each provider in tables 42 to 46, such as the type of computational resources available on each region (datacentre) (table 42) and the price of using these resources on each region for different usage models (the "on-demand" and "reserved" instances from Amazon Web Services (AWS) are an example of the meaning of different usage models in this context) (tables 44, 45, 46).

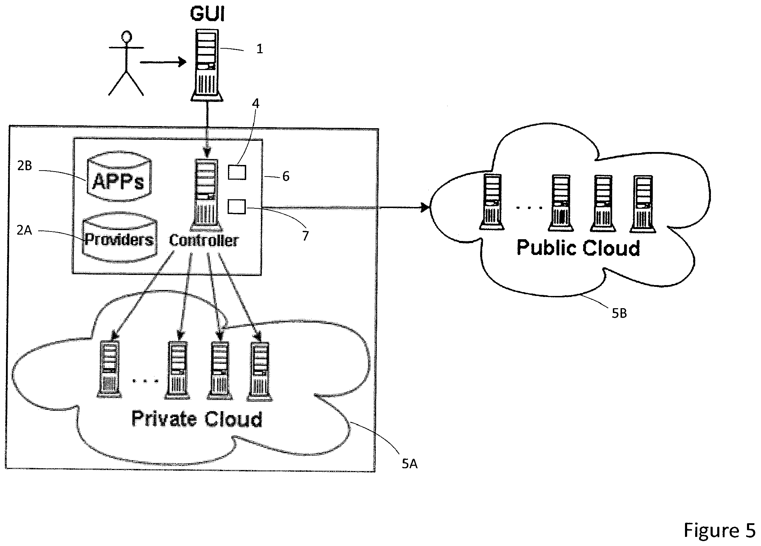

Hardware resources for carrying out a method embodying the present invention are shown in Figure 5. In this embodiment only two servers are employed, one running the graphical user interface 1 and another one, controller node 6, which embodies the applications' and providers' information system 2, the broker 4 and the provisioning system 7.

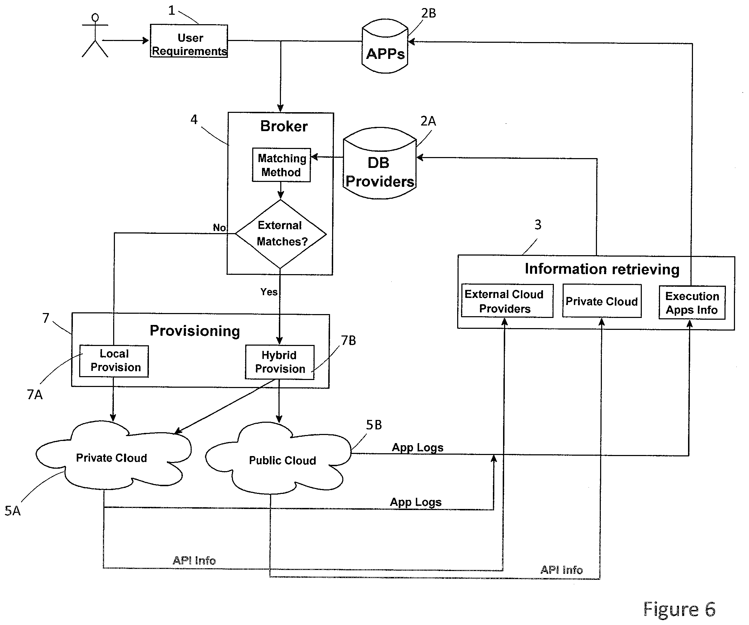

Figure 6 shows functions performed by software components in an embodiment of the present invention. Software components of this embodiment of the present invention are related to the data retrieval of providers and applications, and how this information is combined in order to find the optimal infrastructure taking into account the performance prediction and cost. Some components, such as the information retrieving system 3 and the databases 2B, 2A of applications and providers, have already been explained with reference to previous Figures. The broker 4 carries out a matching method for finding the optimal infrastructure and minimizing the cost of running the application on cloud providers.

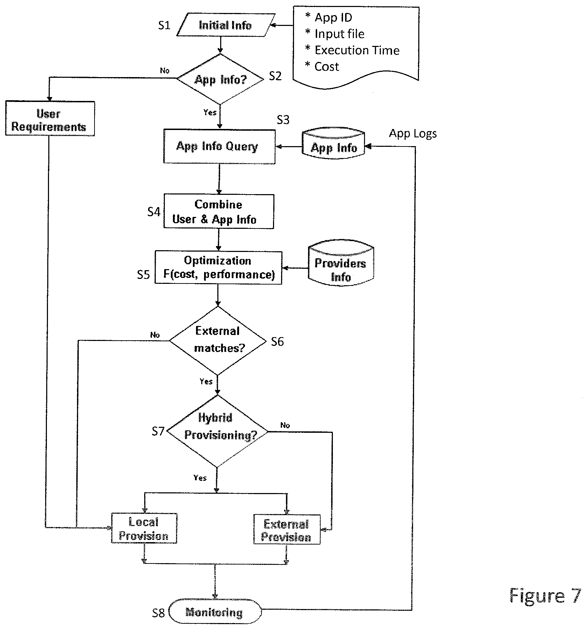

Figure 7 shows a flow chart for explaining operation of the broker 4 in an embodiment of the present invention. Initially (step S1) the user is asked to provide information relating to the application, such as the application identifier and the input parameters, together with the desired cost and execution time constraints. If the necessary application identifier is not available in the applications database 2B ("NO", step S2), then the user computational requirements are used to select appropriate local provision for the application. If the necessary application information is available ("YES", step S2), the application identifier is used (step S3) to retrieve from the applications' database 2B the profiling and performance information of the application executed on different systems. In this embodiment this information has been stored on the application database from previous executions. The profiling and performance information is then combined (step S4) with the cost and performance constraints provided by the user (in step S1). The combined information is used by an optimization method (step S5) carried out by the broker 4 to find the optimal infrastructure and provider that satisfy the cost and execution time constraints by means of artificial intelligence algorithms. A possible result of the optimization method ("NO", step S6) is to find the local provision (private resources) 5A as the most suitable to satisfy the user-set constraints, in which case the local provisioning system 7A is called by the broker 4. Otherwise ("YES", step S6), the broker 4 uses the results provided by the optimization function to call the hybrid provisioning system 7B (step S7). A possible result of the broker 4 is that the most suitable infrastructure is not a hybrid infrastructure and the application must be exclusively deployed on an external/public provider 5B ("NO", step S7), in which case the hybrid provisioning system 7B deploys the application on an external provider 5B. Otherwise ("YES", step S7), the hybrid provisioning system 7B deploys the appropriate external provision/public resources 5B and local provision/private resources 5A for the application. The provisioning system 7 also monitors (step S8) the application and the infrastructure, ensuring that the deployed infrastructure is withdrawn after the execution of the application has been completed. The logs generated after the execution will be fed to the applications' database 2B as part of the training process for future deployments on the hybrid cloud.

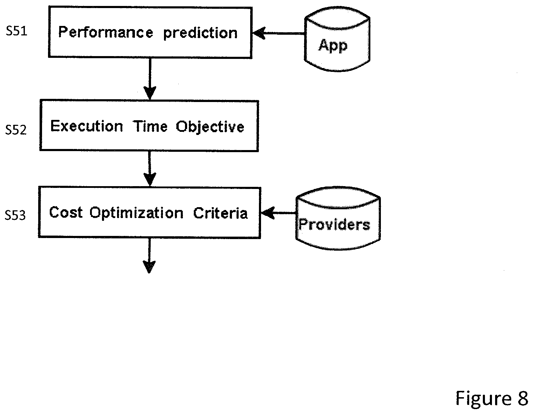

Figure 8 shows a flow chart for use in explaining the optimization method (step S5 of Figure 7). Once the application has been identified, the performance of the application is predicted (step S51) in terms of the total execution time as a function of the input file. The prediction is based on the profiling information for the input file that is stored in the applications' database 2B. The profiling information provides the percentage of the total execution time spent on network communications and also on each function/subroutine of the application for different input files. This information is used to predict the total execution time of the application as a function of the input file for the system where the profiling information has been collected. Once the execution time has been predicted the value is compared with the execution time objective provided by the user (step S52). The profiling information also contains the peak (theoretical) performance of the system and the real performance obtained with a set of synthetic benchmarks. The real and theoretical performance on different cloud providers is compared to evaluate the scalability of the system. The scalability results are used to define the best infrastructure to satisfy the execution time objective. Once the infrastructure is defined, different providers are evaluated to guarantee the cost constraint specified by the user (step S53).

As discussed above, the optimization method relies on stored information, for example from previous results of application profiling and benchmarking of public and private clouds. Even though this information might be stored in the databases 2A, 2B, there might not be an available cloud provider that satisfies the user's cost and performance constraints ("NO", step S6 of Figure 7). In this case, as mentioned above, the user's local resources will be used.

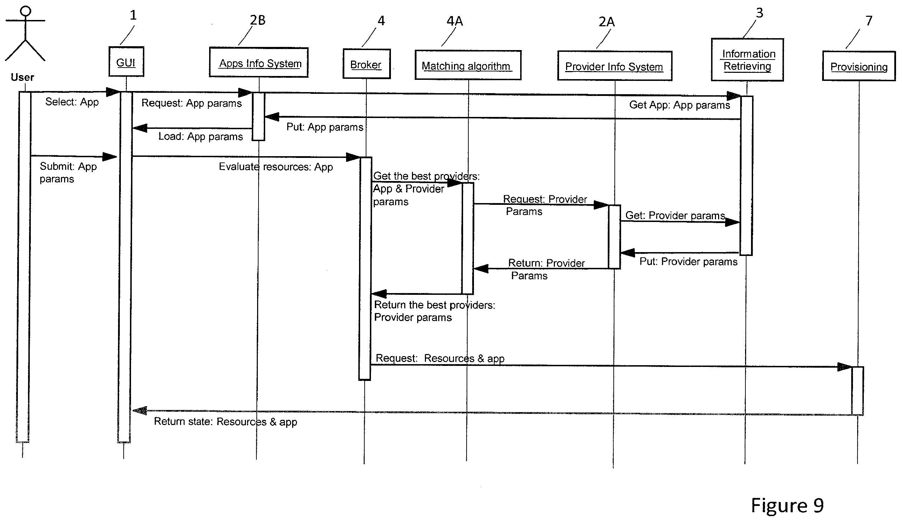

Figure 9 shows a sequence diagram of an embodiment of the present invention that contains the main interactions between the units of the system 10. A user interacts with the GUI 1 that requests the applications' and providers' information system 2 to provide the application parameters for an application specified by the user. The applications' and providers' information system 2 fetches the application parameters from the information retrieving system 3. The parameters are loaded in the GUi 1 and the user configures the application before submission to the broker 4. Once the application is submitted to the broker 4, the broker 4 initiates the matching algorithm 4A that collects information relating to the available cloud providers from the information retrieving system 3 to design the most suitable and affordable infrastructure. As a result the matching algorithm 4A returns the designed infrastructure to the broker 4 that then makes a request to the provisioning system 7 to deploy and manage the infrastructure and the application.

An embodiment of the present invention could be installed as a service on customer resources already running the GUI 1 and the broker 4. In such a case the customer will have already configured a cloud environment with an application programing interface (API) that could be based on the current open source cloud software, such as CloudStack™, OpenStack™ or OpenNebula™. The user would interact with the GUI 1 to define the input file and the time and cost constraints of the application. It is expected that the customer would run a set of applications on the local resources 5A whose performance and profiling information can be stored in the applications' database 2B. This information could be used for performance prediction on external resources 5B and to define the best infrastructure in future executions.

An embodiment of the present invention also collects information from local resources 5A and public cloud providers 5B by means of a set of synthetic benchmarks. The generated information is stored in the providers' database 2A and will be used for performance prediction and validation on external/public cloud providers 5B.

As an example of how the invention may be performed, let us consider the case of a user that has requested a MPI parallel application for a fixed time and with a fixed cost constraint. In this embodiment the user provides the input parameters and, to simplify this example, let us assume the system already has information of the necessary execution time and necessary computational resources on the local infrastructure (private cloud) 5A. The theoretical performance of the local infrastructure systems (CPU, memory, and network bandwidth) is compared with the available resources on external cloud providers 5B, and the broker 4 then chooses, from amongst the private cloud 5A and the public cloud providers 5B, the infrastructure identified as being most suitable, i.e. having the best theoretical performance and minimum cost. To satisfy the execution time constraint previously defined by the user, the broker 4 also takes into account the profiling information of the application that provides information of the application bottlenecks. As a result the broker 4 makes a performance prediction for the cloud provider chosen as most suitable based on the performance information of the application and system. As an example of how to combine the profiling information of the application and the system, let us consider an application where 60% of the execution time is spent on network communications. Therefore, if we are able to improve the network communication performance by a factor of two, a performance improvement of around 30% is expected on the application.

If the broker 4 selects a public cloud provider, the designed infrastructure is deployed and configured by the hybrid provisioning system 7B to run the application. The provisioning system 7 is responsible for monitoring the deployed infrastructure and the execution of the application. Once the application is finished, the provisioning system 7 is responsible for removing the infrastructure.

Embodiments of the present invention may be implemented in hardware, or as software modules running on one or more processors, or on a combination thereof. That is, those skilled in the art will appreciate that a microprocessor or digital signal processor (DSP) may be used in practice to implement some or all of the functionality described above.

The invention may also be embodied as one or more device or apparatus programs (e.g. computer programs and computer program products) for carrying out part or all of the methods described herein. Such programs embodying the present invention may be stored on computer-readable media, or could, for example, be in the form of one or more signals. Such signals may be data signals downloadable from an Internet website, or provided on a carrier signal, or in any other form.

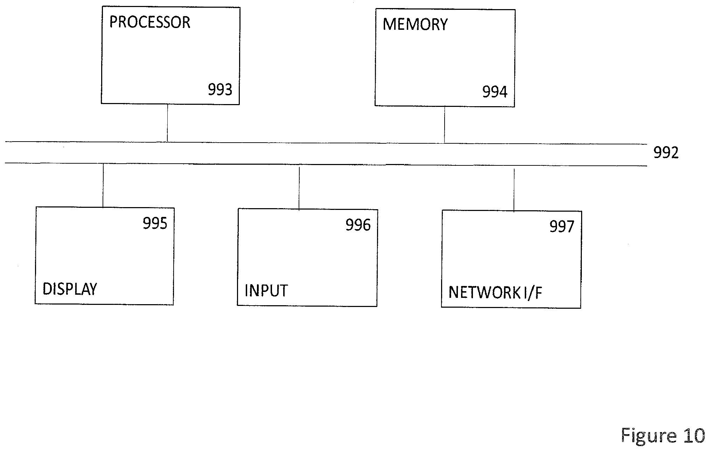

Figure 10 is a block diagram of a computing device, such as a data storage server, which embodies the present invention, and which may be used to implement some or all of the steps of a method embodying the present invention, and perform some or all of the tasks of apparatus of an embodiment. For example, the computing device of Figure 10 may be used to implement all, or only some, of steps S1 to S8 of the method illustrated in Figure 7, to perform all, or only some, of the tasks of controller node 6 shown in Figure 5, to perform all, or only some, of the tasks of GUI 1, information retrieving system 3, broker 4, private cloud 5A and/or provisioning system 7 of Figure 6, and/or to provide some or all of providers' database 2A and/or applications' database 2B of Figure 6.

The computing device comprises a processor 993, and memory, 994. Optionally, the computing device also includes a network interface 997 for communication with other such computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement the methods described with reference to Figures 2, 7, 8 and/or 9 and defined in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 995 may display a representation of data stored by the computing device and may also display a cursor and dialog boxes and screens enabling interaction between a user and the programs and data stored on the computing device. The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device such as that illustrated in Figure 10. Such a computing device need not have every component illustrated in Figure 10, and may be composed of a subset of those components. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The above-described embodiments of the present invention may advantageously be used independently of any other of the embodiments or in any feasible combination with one or more others of the embodiments.

## Claims

1. A method of automatically selecting a computational infrastructure provider to provide an infrastructure system for executing a specified computer application, wherein the method comprises:
predicting respective total execution times of the specified application on a plurality of infrastructure systems as a function of a defined input file, the predicting being carried out on the basis of stored performance information associated with the specified application;
using the predicted total execution times to determine which of the infrastructure systems is most likely to satisfy a predetermined execution time objective for executing the application;
identifying, from a group of computational infrastructure providers comprising a private cloud provider and at least one public cloud provider, computational infrastructure providers which are able to provide the selected infrastructure system, and, for each computational infrastructure provider so identified, comparing the cost of executing the application on the computational infrastructure provider's infrastructure system with a predetermined cost objective for executing the application, the identifying and the comparing being carried out on the basis of stored infrastructure system information associated with the computational infrastructure providers; and
using the result of the comparing to select at least one of the identified computational infrastructure providers which is most likely to meet the cost objective.

2. A method as claimed in claim 1, further comprising automatically deploying the specified application and the selected infrastructure system using the selected computational infrastructure provider.

3. A method as claimed in claim 1 or 2, wherein the stored performance information comprises profiling information that has been obtained from at least one previous execution of the application on the infrastructure systems.

4. A method as claimed in claim 3, further comprising monitoring execution of the deployed application, and storing the actual time and cost to solution of that application on the selected infrastructure system as profiling information for possible use in future selections of computational infrastructure providers.

5. A method as claimed in any one of claims 1 to 4, wherein the stored performance information comprises theoretical and empirical performance results obtained for each computational infrastructure provider in the group using synthetic benchmarks.

6. A computer program which, when run on a computer, causes that computer to carry out a method as claimed in any preceding claim.

7. Computational infrastructure provider selection apparatus for automatically selecting a computational infrastructure provider to provide an infrastructure system for executing a specified computer application, which apparatus comprises:
an applications' database to store performance information associated with different computer applications;
a providers' database to store infrastructure system information associated with the computational infrastructure providers;
an infrastructure selector to select the infrastructure system for executing the specified computer application by:
predicting respective total execution times of the specified application on a plurality of infrastructure systems as a function of a defined input file, the predicting being carried out on the basis of performance information associated with the specified application stored in the applications' database; and
using the predicted total execution times to determine which of the infrastructure systems is most likely to satisfy a predetermined execution time objective for executing the application;
and
a provider selector to select a computational infrastructure provider to provide the selected infrastructure system by:
identifying, from a group of computational infrastructure providers comprising a private cloud provider and at least one public cloud provider, those computational infrastructure providers which are able to provide the selected infrastructure system, and, for each computational infrastructure provider so identified, comparing the cost of executing the application on the computational infrastructure provider's infrastructure system with a predetermined cost objective for executing the application, the identifying and the comparing being carried out on the basis of infrastructure system information associated with the computational infrastructure providers stored in the providers' database; and
using the result of the comparing to select at least one of the identified computational infrastructure providers which is most likely to meet the cost objective.

8. Apparatus as claimed in claim 7, further comprising a deployer to automatically deploy the specified application and the selected infrastructure system using the selected computational infrastructure provider.

9. Apparatus as claimed in claim 7 or 8, wherein the stored performance information comprises profiling information that has been obtained from at least one previous execution of the computer application on a plurality of different infrastructure systems.

10. Apparatus as claimed in claim 9, further comprising a monitor to monitor execution of the deployed application, and store the actual time and cost to solution of that application as profiling information on the selected infrastructure system in the applications' database for possible use in future selections of computational infrastructure providers.

11. Apparatus as claimed in any one of claims 7 to 10, wherein the stored performance information comprises theoretical and empirical performance results obtained for each computational infrastructure provider in the group using synthetic benchmarks.
